Europäisches Patentamt

European Patent Office

Office européen des brevets

(19)

(11) Publication number:

**0 057 990**

**A1**

(12) **EUROPEAN PATENT APPLICATION**

(21) Application number: 82300262.1

(22) Date of filing: 19.01.82

(51) Int. Cl.³: **B 01 J 31/06**
**B 01 J 37/00**

(30) Priority: 19.01.81 US 226454
19.01.81 US 226456
19.01.81 US 226457
19.01.81 US 226525

(43) Date of publication of application:
18.08.82 Bulletin 82/33

(84) Designated Contracting States:
BE DE FR GB IT NL SE

(71) Applicant: MPD Technology Corporation
681 Lawlins Road
Wyckoff New Jersey 07481(US)

(72) Inventor: Bernstein, Philip
16 Stonehouse Road
Glen Ridge New Jersey 07028(US)

(72) Inventor: Coffey, James Peter
137 South Street Extension
Warwick New York 10990(US)

(72) Inventor: Varker, Alan Edward
Rd 1, Overhill Lane
Warwick New York 10990(US)

(72) Inventor: Arms, John Taylor
12 Hoffman Drive
Monroe New York 10950(US)

(72) Inventor: Goodell, Paul Douglas
234 Mulberry Street
Ridgewood New Jersey 07450(US)

(72) Inventor: Clark, William Donald Kennedy
19 Park Avenue
Warwick New York 10990(US)

(74) Representative: Dixon, Sarah et al,
c/o C H Greenstreet Thames House (Fifth Floor) Millbank
London SW1P 4QF(GB)

(54) Polymeric catalyst structure.

(57) A method of making a polymeric catalyst structure comprising a particulate catalyst material encradled in a porous, fibre-containing polymeric material is disclosed. The method includes the steps of dry-processing the catalyst material, a polymeric pore-forming material which is soluble in aqueous media, a support polymer and a fibrillatable polymer to fibrillate the latter and form a homogeneous mixture, and dissolving out the pore-forming material.

Preferably, the fibrillatable polymer is converted to fibrous form in the presence of the other components of the structure.

EP 0 057 990 A1

Croydon Printing Company Ltd.

## Polymeric Catalyst Structure

This invention relates to a polymeric catalyst structure which comprises particles of a catalyst material encradled in a porous, fibre-containing polymeric material, and, more particularly, to a method of producing such a catalyst structure.

A problem that is often encountered in the design of catalytically activated chemical reaction systems is that of providing maximum exposure of the catalyst to the reactants whilst at the same time supporting the catalyst in a suitable manner. For example particulate catalyst structures (e.g. pellets of catalyst material dispersed in a binder) such as are used in fluidised bed reactors suffer from attrition during use, and, as the particles became smaller, may tend to pack together, reducing the effective available surface area of catalyst. It is desirable in some processes to support the catalyst in a thin flexible sheet or membrane e.g. as a liner in a tubular reactor or in a waste conduit to remove pollutants from the waste. The binder and the type of support structure thus have to be selected bearing in mind the environment in which the catalyst is to be used.

The present invention provides a method of preparing a polymeric structure comprising a particulate catalyst material encradled in a porous, fibre-containing polymeric material, which method includes the steps of dry processing the catalyst material, a polymeric pore-forming material which is soluble in aqueous media, a support polymer and a fibrillatable polymer to fibrillate the latter and form a homogeneous mixture, and dissolving out the pore-forming material.

In the method of the invention, the fibrillation and formation of the homogeneous mixture are performed in the absence of a liquid medium i.e. by dry-processing techniques.

Advantageously, the fibrillatable polymer is converted to fibrous form in the presence of the active material at least, and preferably in the presence of all the components of the mixture, although fibrillation may, if desired, be wholly or partially effected before admixture of the components.

By "catalyst material" is meant any material which exhibits catalytic activity or which may be activated to do so. The catalyst material itself may be supported on a carrier such as activated carbon, diatomaceous earth, $Al_2O_3$, $SiO_2$, MgO or combinations thereof.

Examples of suitable catalyst materials which may be used variously in hydrogenation, dehydrogenation, oxidation, isomerisation and aromitisation reactions are nickel, cobalt, molybdenum, copper, rhenium, silver and the platinum group metals. Compounds of these elements and alloys of two or more of these elements may also be used.

Preferably the catalyst material is in the form of a fine powder to provide maximum active surface area. In this connection, catalyst structures produced according to the method of the invention are advantageous in that they provide a convenient and safe method of handling active elemental catalysts which are often pyrophoric when finely divided.

Since the polymeric structure is porous, it can accommodate any changes in the shape or volume of the catalyst material which may occur during use. In addition, the fibres produced from the fibrillatable polymer tend to minimise losses of catalyst material due to attrition.

The catalyst material should constitute at least 50% by weight of the polymeric catalyst structure after removal of the pore-forming material. Preferably, the catalyst will constitute from 75 to 95 weight % of the structure, the remainder being constituted by the fibrillated polymer in an amount of from 1 to 5 weight % with the support polymer as balance.

To develop the porosity in the polymeric structure, before conversion of the fibrillatable polymer to fibres the pore-forming material is dissolved out leaving a frame-work of the interconnecting pores. The dissolution may be effected using any suitable aqueous medium. The pore-forming material is also a polymer. As such, it will be compatable with the other polymeric components of the mixture and serve as the medium in which the other components of the system may be worked and uniformly distributed. A further advantage of using a polymeric pore-forming material is that if, as preferred, the fibrillation is effected in the presence of all the other constituents, it will be facilitated by the use of a polymeric pore-former which may also act as a processing agent for the fibrillatable polymer during conversion of the latter to fibres. The pore-former should also be able to wet the surface of the catalyst material as it is believed that this may contribute to the accessibility of the catalyst material to gases, liquids etc after removal of the pore-former.

We prefer to use a pore-former that can be removed by water alone. Suitable water-soluble pore-forming materials are polyethylene oxide and polypropylene oxide. Polyethylene oxide which has a melting point below 75°C, is freely soluble in water, and will serve as a processing agent in the fibrillation of fibrillatable polymers such as polytetrafluoroethylene (PTFE) and polypropylene is particularly preferred. Preferably the type of polyethylene oxide used will have a molecular weight in the range from 100,000 to 1 000 000. Polyethyleneimine, which may be removed with dilute sulphuric acid, and polyacrylic acid, which may be removed with dilute sodium hydroxide may also be used provided that the catalyst material would not be adversely affected by the acid or alkali.

The amount of pore-forming material used is dependent on the degree of porosity desired in the final product. In general, the amount of pore-forming material employed will constitute at least 10% by weight of the mixture and preferably from 15 to 30%. The polymeric structure itself preferably has a porosity of 70 to 80% by volume and to achieve this an equivalent volume % of pore-forming material is necessary. In the case of polyethylene oxide, this corresponds to 15 to 50 weight %.

The fibrillatable polymer should not, of course, react with any of the other components, and it should be inert in the environment in which the polymeric structure is to be used. Fluorocarbon polymers such as PTFE, and fibrillatable polypropylene are particularly suitable for use as fibrillatable polymers in the method of the present invention. Suitable commercially available, forms of PTFE are the powders sold by du Pont as Teflon 6A and 7A. Fibrillatable polypropylene is available, for example as strands, tape and film which may be used as such or may be cut or chopped to appropriate size.

After removal of the pore-forming material, the fibrillatable polymer (now in fibrous form) may constitute from 0.5 to 5% by weight of the polymeric structure, typically from 1 to 2%.

The support polymer, like the fibrillatable polymer, should not react with any of the other components and should be inert in the environment in which the polymeric structure is to be used. The function of the support polymer is to reinforce the polymeric structure providing it with strength and structural integrity without loss of flexibility. The material or materials used as support polymer should thus be selected with this in mind and also bearing in mind that it is desirable for the fibrillatable polymer to be capable of dispersing in the support polymer. The following themoplastic polymers either alone or in suitable combinations may be used as support polymer in the method of the present invention: polyolefins such as polyethylene, polybutylene, polyisobutylene or copolymers thereof with ethylacrylate and/or vinyl acetate; halogenated polyhydrocarbons and copolymers thereof; polyamides; polysulphones; polyacetates; polycarbonates; polyesters; cellulose esters; silicones. Of these materials the polyolefins are preferred since they are substantially saturated compounds and as such will be chemically inert, particularly towards the catalyst material.

As mentioned above, the fibrillatable polymer is preferably converted to fibrous form in the presence of the other components of the mixture. Fibrillation is achieved by mechanical working in the absence of a liquid medium i.e. by a dry processing technique. Such techniques are known per se and are disclosed for the production of powder products in, for example, US Patents Nos. 3 830 092 and 4 071 946. Fibrillation may be achieved in standard polymer processing equipment such as a Banbury mixer or a ball mill. After fibrillation, the mixture will consist of discrete fibres distributed throughout a homogeneous matrix of pore-forming material, catalyst material and support polymer, and encradling the particles of catalyst material. This mixture may then be shaped by a known processing technique such as extrusion, moulding, blowing or combinations thereof. If a continuous method is desired, fibrillation may be effected in the shaping apparatus, for example rolling apparatus or a twin-screw extruder. With appropriate choice of processing technique, the components can be processed directly to a flexible, coherent sheet or bar of the desired thickness. Sheet having a thickness of as little as 1 to 10 mm may be produced and still have structural integrity. Such a thin, flexible sheet or membrane forms a particularly useful support structure for catalysts which have to line, for example, a tubular reactor or a waste pipe. The sheets may be used in a single thickness or as multiple layers. An external support may be provided if this is required by the environment in which the sheet is to be used. Alternatively, the mixture may be made into pellets and used as such, or the pellets may be extruded or blown or injection moulded to a film.

In a system in which the support polymer is low density polyethylene, the fibrillatable polymer is PTFE and the pore-forming material is polyethylene oxide, the following proportion ranges would be used (parts by weight):

| Material | Parts |
|---|---|
| low density polyethylene | 5 to 10 |
| PTFE (Teflon 7A) | 1 to 5 |
| Polyethylene oxide (Polyox WRSN-10) | 40 to 60 |
| Catalyst material (e.g. Ni-powder) | 142 |

The ratio of polymer to active material may be varied depending on the equipment used for processing and the end use of the structure. In general, however, prior to removal of the pore-forming material the mixture will comprise (in weight %) from 50 to 75% catalyst material, from 0.5 to 5% fibrillatable polymer and from 47 to 10% pore-forming material, the balance being support polymer.

Using these components, mixing may be carried out as a continuous process simultaneously with fibrillation, e.g. in a two-roll mill at 65-75°C, using the addition sequence: support polymer, pore-forming material, fibrillatable polymer, catalyst material. Alternatively, a batch process may be used. For example, the PTFE may be fibrillated in a Banbury mixer with the catalyst material alone to provide good fibrillation and dispersion of fibres in the catalyst material. This mixture is then removed from the mixer.

The mixer is pre-heated to a temperature of 75 to 100°C and the mixing speed is held at 14 RPM whilst the polyethylene and polyethylene oxide are introduced into the mixer and mixed for about 5 to 10 minutes to ensure fluxing.

Next, the pre-blend of active material and fibrillated PTFE is added, and mixing is continued for a further 5 to 10 minutes. The resultant mixture is removed from the mixer and may then be shaped as desired for example by extrusion to rod or tube.

After shaping, the pore-forming material is removed by leaching the polymeric structure in water to produce a porous structure in which the particles of active material are encradled in discrete fibres.

The invention also specifically includes the use of a polymeric structure as described above as a catalyst for a chemical reaction.

## Claims

1.          A method of preparing a polymeric structure comprising a particulate catalyst material encradled in a porous, fibre-containing polymeric material which method includes the steps of dry-processing the catalyst material, a polymeric pore-forming material which is soluble in aqueous media, a support polymer and a fibrillatable polymer to fibrillate the latter and form a homogeneous mixture and dissolving out the pore-forming material.

2.          A method as claimed in claim 1, wherein the fibrillatable polymer is fibrillated in the presence of the catalyst material, the pore-forming material and the support polymer.

3.          A method as claimed in claim 2, wherein the pore-forming material is a processing agent for the fibrillatable polymer.

4.          A method as claimed in any preceding claim wherein the pore-forming material constitutes from 70 to 80% by volume of the mixture.

5.          A method as claimed in any preceding claim, wherein the pore-forming material is polyethylene oxide, polypropylene oxide or a mixture thereof.

6.          A method as claimed in any preceding claim, wherein the fibrillatable polymer is polytetrafluoroethylene or polypropylene.

7.          A method as claimed in any preceding claim, wherein the support polymer is thermoplastic.

8.          A method as claimed in claim 8 wherein the support polymer is polyethylene.

9.          A method as claimed in any preceding claim, wherein the polymeric structure is prepared in particulate form.

10.          A method as claimed in any one of claims 1 to 9, wherein the polymeric structure is prepared in sheet form.

11.      A method as claimed in any preceding claim wherein after removal of the pore-forming material, the catalyst material constitutes from 75 to 95% by weight of the polymeric structure.

12.      A method as claimed in any preceding claim, wherein the catalyst material is nickel, cobalt, molybdenum, rhenium, copper, silver, a platinum group metal or a mixture, compound or alloy of two or more of these elements.

13.      Use of a polymeric structure produced by a method as claimed in any one of the preceding claims as a catalyst in a chemical reaction.

0057990

European Patent Office

**EUROPEAN SEARCH REPORT**

Application number

EP 82 30 0262

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | FR - A - 2 450 121 (YARDNEY ELECTRIC CORP.) <br> * Claims 1,12,13; page 2, line 11 - page 3, line 14; page 4, lines 8-15; page 5, lines 12-27; page 6, lines 2-18 * <br> & US - A - 4 235 748 <br><br> -- | | B 01 J 31/06 <br> 37/00 |
| A | US - A - 3 766 013 (P. SALVATORE FORGIONE) <br> * Claims 1,2; column 4, line 46 - column 5, line 22 * <br><br> -- | 1 | |
| A | US - A - 4 224 185 (H.J. WRISTERS) <br> * Claims 1,3; column 5, lines 46-53; example 1 * <br><br> ---- | | **TECHNICAL FIELDS SEARCHED (Int.Cl. 3)** <br><br> B 01 J 31/06 <br> 37/00 <br><br> H 01 M 4/88 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search <br> The Hague | Date of completion of the search <br> 06-05-1982 | Examiner <br> D'HONDT |

EPO Form 1503.1 06.78